# EUROPÄISCHE PATENTSCHRIFT

(11) **EP 3 491 349 B1**
(45) Veröffentlichungstag und Bekanntmachung des Hinweises auf die Patenterteilung: **08.04.2020**
(21) Anmeldenummer: 17748706.3
(22) Anmeldetag: 27.07.2017
(51) Int. Cl.: G01G 17/06

(54) **ELEKTROMECHANISCHER STELLANTRIEB FÜR EIN SCHÜTTGUTABSPERRORGAN**
ELECTROMECHANICAL ACTUATOR FOR A BULK GOODS BLOCKAGE BODY
MECANISME DE COMMANDE ELECTROMECANIQUE POUR ORGANE DE VERROUILLAGE DE PRODUITS EN VRAC

(30) Priorität: 27.07.2016 EP 16181512
(43) Veröffentlichungstag der Anmeldung: 05.06.2019
(73) Patentinhaber: Bühler AG, 9240 Uzwil (CH)
(72) Erfinder: SCHAI, Peter, 9240 Uzwil (CH); HAID, René, 9242 Oberuzwil (CH); KLEINER, Andreas, 9527 Niederhelfenschwil (CH); BRAND, Heinz, CH-9050 Appenzell (CH)
(74) Vertreter: Hepp Wenger Ryffel AG
(86) Internationale Anmeldenummer: PCT/EP2017/068992
(87) Internationale Veröffentlichungsnummer: WO 2018/019930

(56) Entgegenhaltungen:
- EP-A1- 1 586 784
- DE-A1-102012 012 515
- DE-C1- 3 619 231
- US-A- 4 390 090
- Wolf-Dieter Roth: "Superkondensatoren als abnutzungsfreie Energiespeicher statt Akkumulatoren", , 22. April 2014 (2014-04-22), XP002766313, Gefunden im Internet: URL:http://www.all-electronics.de/superkon densatoren-als-abnutzungsfreie-energiespei cher-statt-akkumulatoren/ [gefunden am 2017-01-24]

## Beschreibung

Die Erfindung betrifft ein elektromechanischer Stellantrieb für ein Schüttgutabsperrorgan, eine Vorrichtung zum Dosieren und/oder Wiegen von Schüttgut mit wenigstens einem solchen Schüttgutabsperrorgan sowie ein Verfahren zum Betreiben eines elektromechanischen Stellantriebs für ein Schüttgutabsperrorgan.

In der US-4,390,090 ist eine Schüttgutladevorrichtung für die Beladung von freifliessendem Schüttgut in ein Transportvehikel oder eine andere geeignete Lagereinrichtung beschrieben, welche den Austritt von Staub in die Umgebung bei einer solchen Beladung verringern soll. In die Vorrichtung eintretendes Schüttgut wird zunächst in einer trichterartigen Einheit abgebremst, ehe es auf eine zwei Klappen umfassende Klappenbaugruppe trifft. Eine auf diese Klappenbaugruppe wirkende Schliesskraft wird mittels Federn mit Hilfe eines elektrischen Motors eingestellt. Die Klappen der Klappenbaugruppe öffnen sich gegen die so eingestellte Schliesskraft, wenn sich eine ausreichende Menge Schüttgut auf den Klappen der Klappenbaugruppe angesammelt hat.

Aus dem Stand der Technik sind beispielsweise aus der EP 1 715 309 A1 Stellantriebe bekannt, welche mit Druckluft gespeist werden. Schüttgut wird aus einem Vorratsbehälter in ein Lastgefäss, welches mit einer Wägezelle zusammenwirkt, abgegeben. Beim Erreichen eines gewünschten Schüttgewichts im Lastgefäss wird ein Klappenmechanismus des Lastgefässes mittels des pneumatischen Stellantriebes betätigt und das Lastgefäss somit entleert.

Nachteilig bei solchen bekannten Stellantrieben ist, dass diese zunächst einen Druckluftanschluss benötigen. Ferner sind pneumatische Stellantriebe sehr Energieintensiv, da Druckluft erst erzeugt und dauernd bereitgestellt werden muss, auch wenn der pneumatische Stellantrieb nicht aktiviert ist. Zudem sind die Vorrichtungen meistens so ausgelegt, dass der Klappenmechanismus in der Schliessposition aktiv gehalten oder verriegelt werden muss, was wiederum eine ständige Beaufschlagung der Aktuatoren mit Druckluft bzw. den Einbau von Bremsen/Verriegelungen bedeutet. Ferner sind pneumatische Stellantriebe nicht stufenlos sondern nur reversibel zwischen zwei Anschlagpositionen betätigbar.

Es ist daher Aufgabe der Erfindung einen Stellantrieb anzugeben, welche die Nachteile des Bekannten vermeidet und insbesondere Energieeinsparungen erlaubt, eine schnelle und stufenlose Betätigung von Schüttgutabsperrorganen ermöglicht, mit niedrigen, elektrischen Strömen betreibbar ist und die hohe Drehmomente beim Anfahren liefern kann.

Die Aufgabe wird mit einem elektromechanischen Stellantrieb und einem Verfahren zum Betreiben eines elektromechanischen Stellantriebs gemäss den unabhängigen Ansprüchen gelöst.

Der elektromechanische Stellantrieb für ein Schüttgutabsperrorgan umfasst einen Elektromotor und eine dem Elektromotor zugeordnete Steuerungs- und Antriebselektronik. Die Motorwelle des Elektromotors ist direkt oder indirekt mit dem Absperrorgan verbunden.

Erfindungsgemäss umfasst der elektromechanische Stellantrieb Mittel zum Speichern von Energie.

Insbesondere umfasst die Steuerungs- und Antriebselektronik Mittel zum Speichern von elektrischer Energie.

Durch die Mittel zum Speichern von Energie ist lediglich eine Niedrigstromeinspeisung notwendig, da Stellantriebe für Schüttgutabsperrorgane nicht kontinuierlich sondern zyklisch mit Betriebspausen betätigt werden. Der Energieverbrauch kann somit gegenüber pneumatischen Stellantrieben gesenkt werden. Der kurzzeitig beim Betätigen des Stellantriebes notwendige Energiebedarf wird durch die Mittel zum Speichern von Energie abgedeckt, welche als Puffer zur Überbrückung der Energiebedarfsspitze wirken. Es sind somit keine grossen Kabelquerschnitte für die Einspeisung von elektrischem Strom notwendig, welche meist sehr kostenintensiv sind. Ferner entfällt ebenfalls die Notwendigkeit von Platz- und Kostenintensiven Transformatoren und Gleich- oder Umrichtern. Zudem ist der Elektromotor meist bei verschiedenen Winkelpositionen der Antriebswelle betätigbar und erlaubt somit eine Betätigung eines Schüttgutabsperrorganes bei verschiedenen Positionen.

Wenn der Elektromotor nicht betätigt wird kann, je nach Ausführungsform, die Steuerungs- und Antriebselektronik dafür sorgen, dass die Mittel zum Speichern von elektrischer Energie wieder aufgefüllt werden.

Bevorzugt sind die Mittel zum Speichern von elektrischer Energie als Superkondensatoren ausgebildet.

Superkondensatoren eignen sich besonders für die kurzzeitige Bereitstellung von hohen Stromstärken. Zudem sind Superkondensatoren nahezu wartungsfrei und haben eine höhere Lebensdauer als beispielsweise Akkumulatoren.

Insbesondere können die Superkondensatoren Stromstärken von 25 Ampere liefern. Diese Stromstärken erlauben eine schnelle und sofortige Betätigung von insbesondere schweren Absperrorganen. Gewünschte Betätigungszeiten von Absperrorganen liegen oft in einem Bereich unterhalb von 0,5 Sekunden (von komplett Geschlossen bis Offen oder umgekehrt).

Der Elektromotor ist bevorzugt ein Gleichstrommotor. Besonders bevorzugt ist der Elektromotor ein bürstenloser Gleichstrommotor.

Gleichstrommotoren eignen sich insbesondere mit Superkondensatoren für die oben genannten Zwecken. Zudem können Gleichstrommotoren und insbesondere bürstenlose Gleichstrommotoren in beide Drehrichtungen schrittweise betrieben werden und können zudem als Energiegenerator verwendet werden.

Bevorzugt ist der Elektromotor ein Servomotor. Als Servomotor im Sinne der vorliegenden Erfindung sind alle Elektromotoren gemeint, welche mit einem Sensor zur Bestimmung der Position der Motorwelle ausgestattet sind. Der Sensor ist mit der Steuerungs-und Antriebselektronik verbunden und erlaubt sowohl eine Bestimmung der Winkelposition der Motorwelle und somit der Position/Stellung des Absperrorgans als auch das Erreichen halten einer gewünschten Winkelposition der Motorwelle und somit das Erreichen einer gewünschten Position/Stellung des Absperrorgans.

Bevorzugt ist der Elektromotor zur Erzeugung von elektrischer Energie ausgebildet.

Die vom Elektromotor erzeugte, elektrische Energie wird insbesondere in die Mittel zum Speichern von elektrischer Energie eingespeist. Der Stellantrieb wird dabei bevorzugt so ausgelegt, dass beim Betätigen des Absperrorgans, das Absperrorgan selber zumindest abschnittweise während der Bewegung durch Schwerkraft und/oder Schüttguteinwirkung bewegt wird. Da damit keine elektrische Energie notwendig ist, kann der Elektromotor als Generator verwendet werden. Damit wird der Stromverbrauch des Stellantriebs noch weiter verringert, da elektrische Energie ohne externe Einspeisung gewonnen und wiederverwendet werden kann.

Bevorzugt ist der Stellantrieb mit einer Stromstärke von höchstens 3 Ampere betreibbar.

Bevorzugt erfolgt die Einspeisung des Stellantriebs mit einer Spannung im Niedrigstrombereich, insbesondere unterhalb 48 V, besonders bevorzugt zwischen 22 und 28V.

Es ist somit möglich, mit einer niedrigen Spannung und mithilfe der Mittel zum Speichern von elektrischer Energie (z.B. Superkondensatoren), trotzdem hohe Leistungen des Elektromotors zu erzeugen.

Bevorzugt umfasst der Stellantrieb ferner ein Getriebe. Das Getriebe ist bevorzugt als Kompaktgetriebe ausgebildet, insbesondere mit einem Planetengetriebe. Für besondere Anwendungen umfasst das Getriebe ein Winkelgetriebe.

Je nach Anwendung kann somit der Stellantrieb angepasst werden. Beispielsweise, je nach Getriebeübersetzung, sind sehr hohe Drehmomente oder eine sehr genaue Positionierung des Absperrorganes möglich.

Bevorzugt ist die Steuerungs- und Antriebselektronik direkt am Elektromotor angeordnet. Insbesondere befindet sich die Steuerungs- und Antriebselektronik in einem gemeinsamen Gehäuse mit dem Elektromotor und ggf. weiter vorhandenen Komponenten.

Bevorzugt ist der Stellantrieb derart ausgebildet, dass eine Position des Absperrorgans, insbesondere eine Extremposition (d.h. eine Position, welche vom Absperrorgan nicht überschritten wird; z.B. eine Schliessposition oder eine Freigabeposition) bei stromlosem Elektromotor (d.h. dass der Elektromotor nicht mit elektrischem Strom versorgt wird) haltbar ist.

Somit ist keine Verriegelung des Absperrorgans notwendig, was normalerweise die Betätigungszeiten verlängert, da das Absperrorgan zunächst entriegelt und dann bewegt werden muss. Zudem sind somit Energieeinsparungen möglich und die durchschnittliche Leistungsaufnahme des Stellantriebs wird weiter verringert.

Bevorzugt umfasst der Stellantrieb ein Kniehebelgelenk, welches eine Motor- oder Getriebewelle mit dem Absperrorgan direkt oder indirekt (d.h. über weitere Bauteile) verbindet, wobei ein Totpunkt des Kniehebelgelenks derart ausgelegt ist, dass eine Position des Absperrorgans bei stromlosem Elektromotor haltbar ist.

Insbesondere ist durch Eigengewichts des Absperrorgans und/oder wenn Schüttgut stromaufwärts des Absperrorgans gestaut wird, die Position des Absperrorgans bei stromloser Elektromotor haltbar.

Bevorzugt umfasst das Kniehebelgelenk einen ersten Hebel mit einem exzentrisch angeordneten oder anordenbaren ersten Achsstummel, welcher erster Hebel an einer Motor- oder Getriebewelle drehbar gelagert ist, und eine Koppelstange, welche an dem ersten Achsstummel drehbar gelagert ist. Das Kniehebelgelenk umfasst ferner einen zweiten Hebel mit einem exzentrisch angeordneten oder anordenbaren zweiten Achsstummel, welcher zweiter Hebel um die Schwenkachse eines schwenkbaren Absperrorgans und am ersten Achsstummel drehbar gelagert oder lagerbar ist. Die Koppelstange, welche jeweils an dem ersten Achsstummel und dem zweiten Achsstummel drehbar gelagert ist, koppelt somit den ersten Hebel mit dem zweiten Hebel

Falls kein schwenkbares Absperrorgan Anwendung findet, kann der zweite Hebel in Wirkverbindung mit dem Absperrorgan (z.B. eine verschiebbare Verschlussplatte) sein oder mit dem Absperrorgan in Wirkverbindung gebracht werden.

Aufgrund des Kniehebelgelenks ist somit eine Übertragung von genug grossen Drehmomenten/Kräften möglich, so dass das Absperrorgan schnell bewegt werden kann.

Der erfindungsgemässe Stellantrieb findet bevorzugt bei einer Materialwaage Anwendung. Dabei ist das Absperrorgan bevorzugt als schwenkbare Klappe ausgebildet und steht mit wenigstens einer Wägezelle in Wirkverbindung, so dass ein Gewicht von aufgestautem Schüttgut mit der Klappe in einer Schliessposition ermittelt werden kann. Über eine Steuerung wird dann beim Erreichten des gewünschten Gewichts die Klappe in eine Freigabeposition gebracht. Stromaufwärts der Klappe kann eine Dosiereinrichtung vorhanden sein, welche die Menge an Schüttgut, welche zur Klappe gelangt, einstellen kann, so dass beispielsweise beim Erreichen des gewünschten Gewichtes und kurz vor dem Schwenken der Klappe in die Freigabeposition der Schüttgutfluss unterbrochen wird, so dass nur die abgewogene Menge an Schüttgut abgegeben werden kann.

Die Erfindung betrifft ferner eine Vorrichtung zum Dosieren und/oder Wiegen von Schüttgut umfassend wenigstens ein Schüttgutabsperrorgan, welches von wenigstens einem elektromechanischen Stellantrieb wie oben beschrieben betätigbar ist.

Erfindungsgemäss umfasst die Betätigung des Schüttgutabsperrorgans ein Öffnen und/oder Schliessen desselben.

Die oben bezüglich des erfindungsgemässen elektromechanischen Stellantriebs beschriebenen bevorzugten Aus- und Weiterbildungen sowie die damit verbundenen Vorteile sind somit entsprechend auf die erfindungsgemässe Vorrichtung anwendbar.

Bevorzugt ist die Vorrichtung als Schüttgutwaage ausgebildet, wobei das Schüttgutabsperrorgan als schwenkbare Klappe ausgebildet ist.

Die Aufgabe wird ferner von einem Verfahren zum Betreiben eines elektromechanischen Stellantriebs für ein Schüttgutabsperrorgan gelöst.
Bei dem elektromechanischen Stellantrieb handelt es sich bevorzugt um einen elektromechanischen Stellantrieb wie oben beschrieben.

Der elektromechanische Stellantrieb umfasst einen Elektromotor, eine dem Elektromotor zugeordnete Steuerungs- und Antriebselektronik sowie und Mittel zum Speichern von Energie.

Erfindungsgemäss wird beim Betätigen des Stellantriebes durch den Elektromotor Energie in den Mitteln zum Speichern von Energie gespeichert.

Insbesondere umfasst die Betätigung des Schüttgutabsperrorgans ein Öffnen und/oder Schliessen desselben.

Bevorzugt umfasst die Steuerungs- und Antriebselektronik die Mittel zum Speichern von Energie, welche als Mittel zum Speichern von elektrischer Energie ausgebildet sind, wobei die Energie als elektrische Energie, bevorzugt in Superkondensatoren der Steuerungs- und Antriebselektronik (3), gespeichert wird.

Die Erfindung wird nachfolgend anhand eines bevorzugten Ausführungsbeispiels in Verbindung mit der Zeichnung beschrieben. Es zeigen:
- Fig. 1: eine Draufsicht auf einen Betätigungsmechanismus in der Schliessposition;
- Fig. 2: eine Draufsicht auf einen Betätigungsmechanismus in der Freigabeposition;
- Fig. 3: eine Draufsicht auf eine Schüttgutdosiervorrichtung;
- Fig. 4: eine Schnittansicht durch die Ebene A-A der Figur 3;
- Fig. 5: eine perspektivische Ansicht eines Stellantriebs;
- Fig. 6: der Stellantrieb der Figur 5 ohne Gehäusedeckel;
- Fig. 7: der Stellantrieb der Figur 5 ohne Gehäuse; und
- Fig. 8: ein schematischer Ablauf der Leistungsaufnahme eines Stellantriebs.

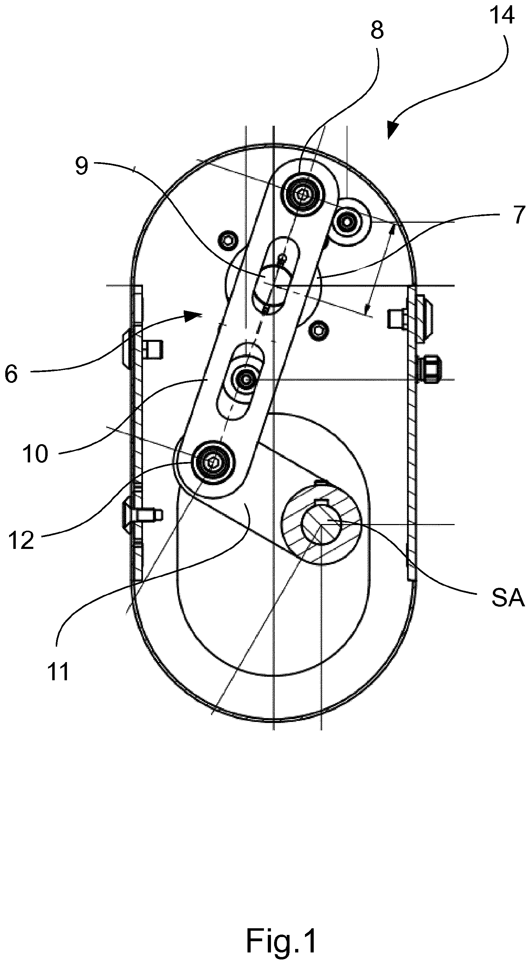

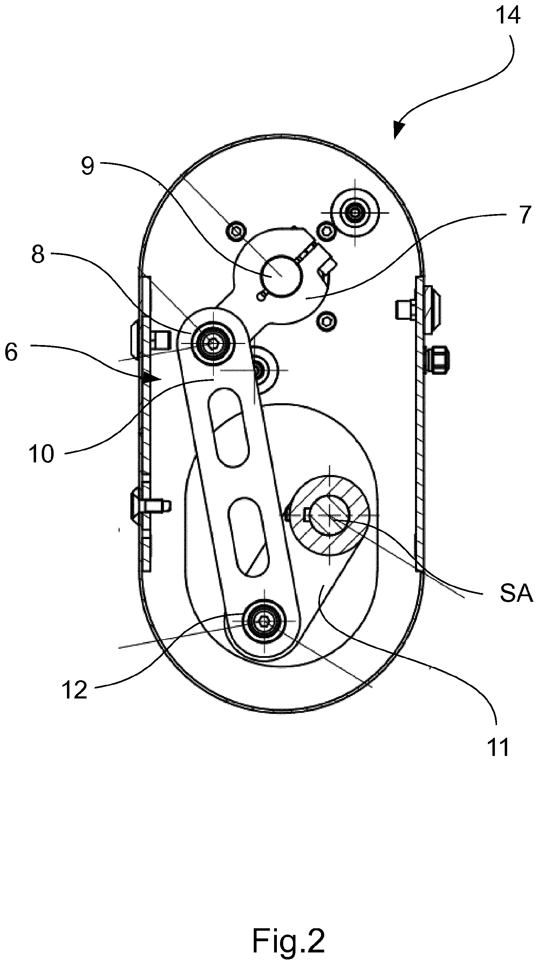

In den Figuren 1 und 2 ist Mechanismus 14 mit einem Kniehebelgelenk 6 dargestellt, wobei das Gelenk 6 sich in einer Schliessposition S bzw. in einer Freigabeposition F befindet.

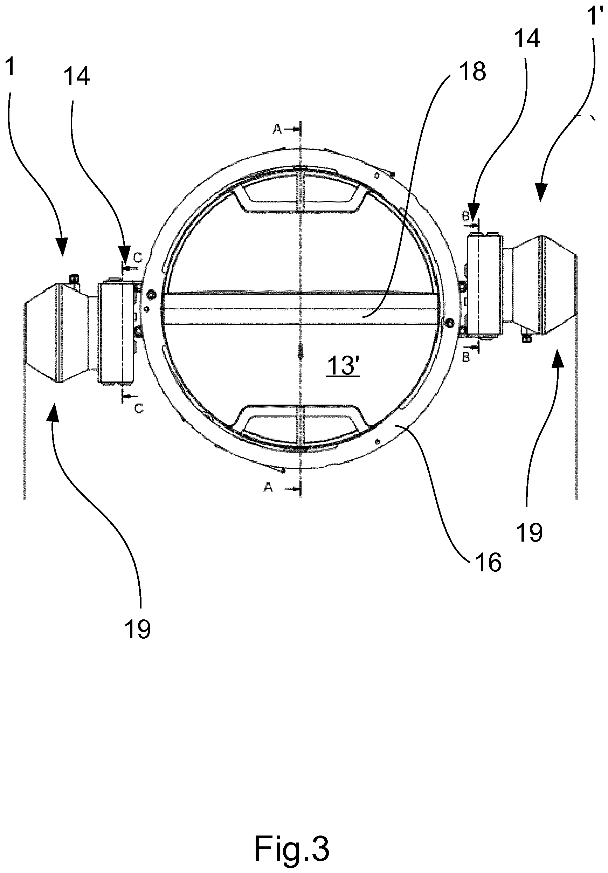

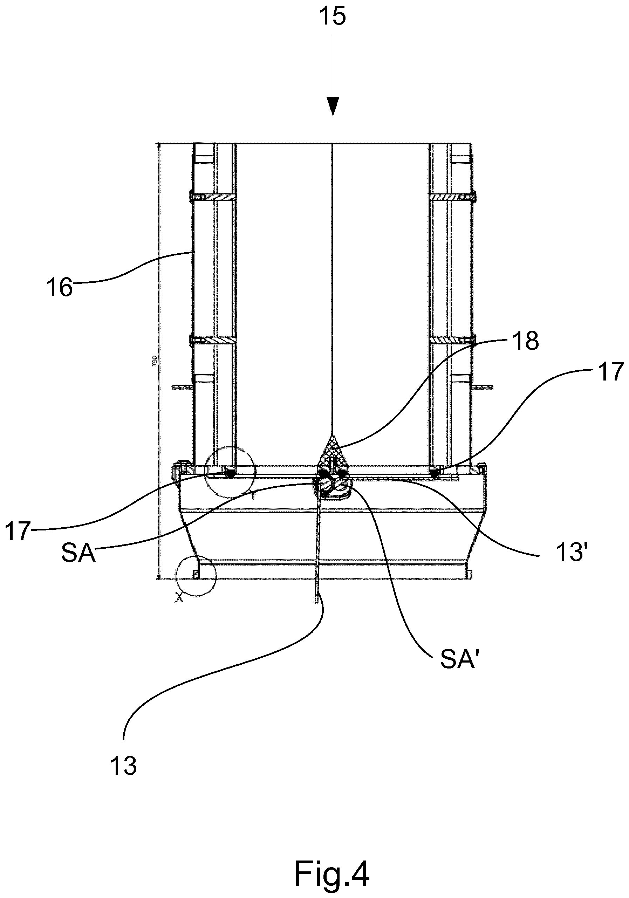

Das Gelenk 6 umfasst einen ersten Hebel 7 und einen zweiten Hebel 11, welche jeweils drehbar an einer Getriebewelle 9 eines in den Figuren 3 bis 6 gezeigten Stellantriebs 1 bzw. einer Schwenkachse SA einer Klappe 13 (sichtbar in der Figur 4) gelagert ist.

Der erste und der zweite Hebel 7 bzw. 11 weisen jeweils einen exzentrisch angeordneten Achsstummel 8 bzw. 12 auf. Beide Achsstummel 8 bzw. 12 sind über eine Koppelstange 10 miteinander verbunden.

Eine Drehung des ersten Hebels 7 bewirkt über die Koppelstange 10 ebenfalls eine Drehung des zweiten Hebels 11.

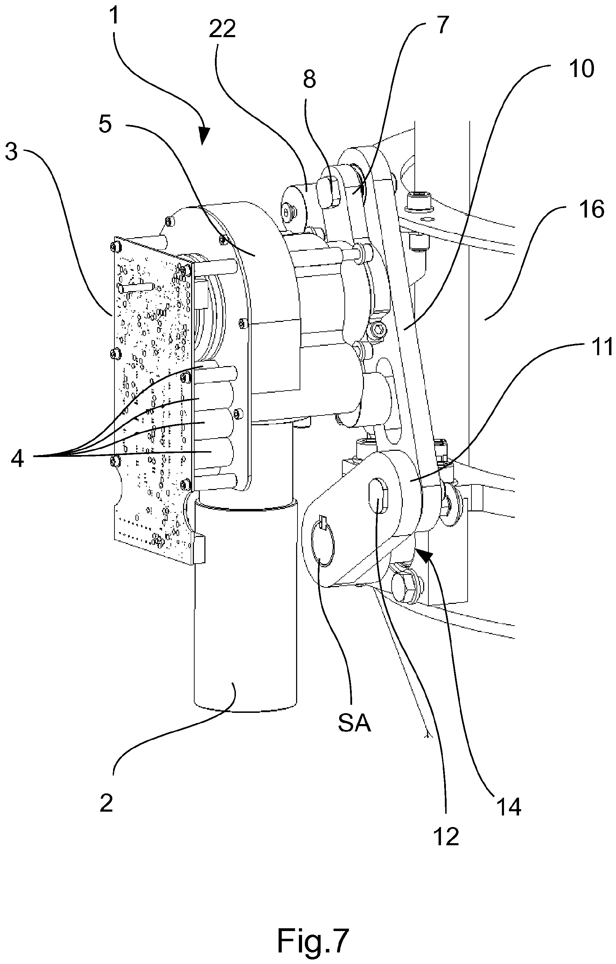

Wie aus der Figur 1 sichtbar, ist der Mechanismus 14 derart ausgelegt, dass in der Schliessposition S der erste Hebel 7 über den oberen Totpunkt gedreht wird und die Koppelstange 10 an einem Anschlagelement 22 (sichtbar in der Figur 7) anliegt.

Somit können an dem zweiten Hebel 11 auftretende Drehmomente nicht eine Drehung des ersten Hebels 7 verursachen, da eine weitere Drehung des ersten Hebels 7 durch das bewegungseinschränkende Anschlagelement 22 verhindert wird und der Mechanismus 14 somit selbsthemmend wirkt.. Es ist somit nicht notwendig, das Gelenk 6 zusätzlich mit einer Bremse oder Verriegelung zu versehen.

In den Figuren 3 und 4 ist eine Schüttgutdosiervorrichtung gezeigt, welche zwei Stellantriebe 1 und 1' mit je einem Mechanismus 14 umfasst. Ein Antrieb 1 oder 1' umfasst einen als Servomotor ausgebildeten Elektromotor 2, eine Steuerungs- und Antriebselektronik 3 mit einer Mehrzahl von Superkondensatoren 4 und ein Getriebe 5.

Eine Fliessrichtung des Schüttgutes ist schematisch mit dem Pfeil 15 dargestellt. Die Schüttgutdosiervorrichtung ist in einem Gehäuse 16 angeordnet, welche in eine Schüttgutleitung anordenbar ist bzw. Teil einer Schüttgutleitung sein kann.

Die Schüttgutdosiervorrichtung umfasst zwei Klappen 13 und 13', welche jeweils um eine Schwenkachse SA bzw. SA' gelagert sind. Die Klappe 13 wurde nach unten geschwenkt und befindet sich somit in der Freigabeposition F. Die Klappe 13' befindet sich in der Schliessposition S und wirkt mit einer am Gehäuse 16 angeordneten Dichtung 17 zusammen, um den Schüttgutdurchgang in Fliessrichtung 15 zu unterbrechen.

Beide Schwenkachsen SA und SA' sind parallel und nebeneinander angeordnet. Die Klappen 13 und 13' sind gegenläufig nach unten klappbar.

Jede Klappe 13 oder 13' wird zwischen der Schliessposition S und der Freigabeposition F um 90° um die jeweilige Schwenkachse SA bzw. SA' geschwenkt. Wie aus den Figuren 1 und 2 sichtbar entspricht eine Schwenkung der Klappe 13 bzw. 13' einer Drehung um ebenfalls 90° des zweiten Hebels 11. Aufgrund des Übersetzungsverhältnisses ist aber eine Drehung des ersten Hebels 7 um mehr als 90° notwendig, um die Klappe 13 bzw. 13' in die Freigabeposition F zu bringen.

Im Bereich der beiden Schwenkachsen SA und SA' ist ein im Querschnitt dreieckiger Umlenkkörper 18 mit nach oben gerichteter Spitze angeordnet. Der Umlenkkörper 18 verhindert, dass Schüttgut im Bereich der Schwenkachsen SA und SA' gelangt.

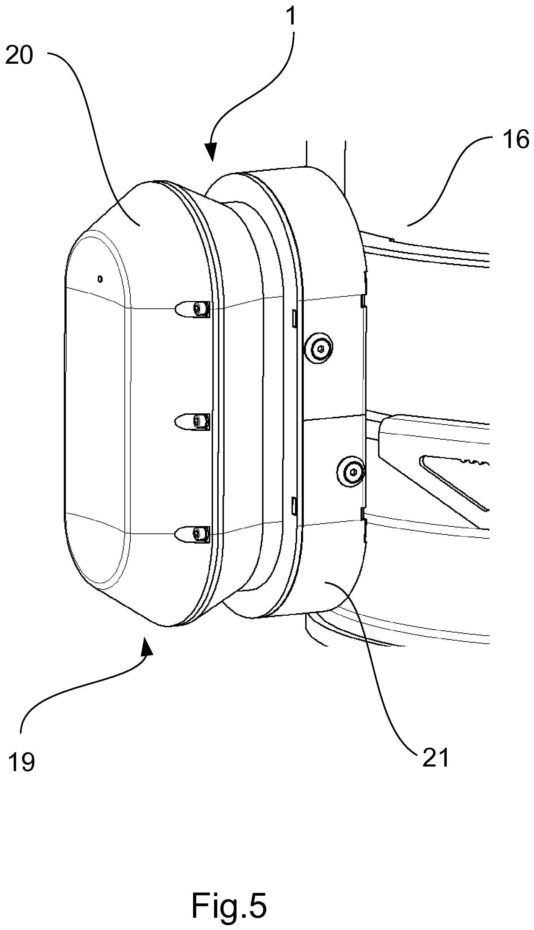

In den Figuren 5 bis 7 ist der Stellantrieb 1 perspektivisch dargestellt, jeweils in einem Gehäuse 19, ohne einen Gehäusedeckel 20 und eine Abdeckung 21 des Mechanismus 14, und ohne Gehäuse 19.

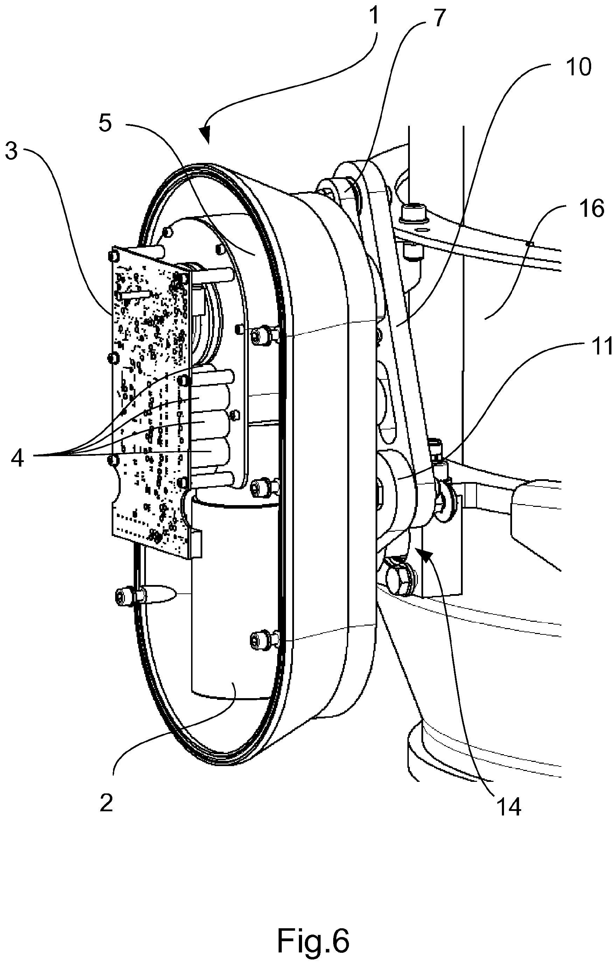

Der Mechanismus 14 der Figuren 1 und 2 ist in den Figuren 6 und 7 sichtbar und befindet sich in der Schliessposition S. Ersichtlich ist die Anordnung des Elektromotors 2 mit einem als Winkelgetriebe ausgebildeten Getriebe 5. Die Steuerungs- und Antriebselektronik 4 ist direkt an der Elektromotor-GetriebeEinheit befestigt. Die Steuerungs- und Antriebselektronik 4 umfasst ferner eine Mehrzahl von Superkondensatoren 4. Der gesamte Stellantrieb 1 ist in dem Gehäuse 19 geschützt aufgenommen.

Durch die Superkondensatoren 4 ist es einerseits möglich, dass elektrische Energie zurückgewonnen und gespeichert wird, z.B. wenn die Klappe 13 in die Freigabeposition F lediglich durch Schwerkraft geschwenkt wird.

Ferner kann damit die beim Betätigen des Absperrorgans kurzzeitig benötigte hohe Leistung aus den Superkondensatoren 4 bezogen werden. Somit sind keine hohen Spannungen zur Versorgung des Stellantriebs 1 notwendig. Grosse Kabelquerschnitte sind ebenfalls nicht notwendig.

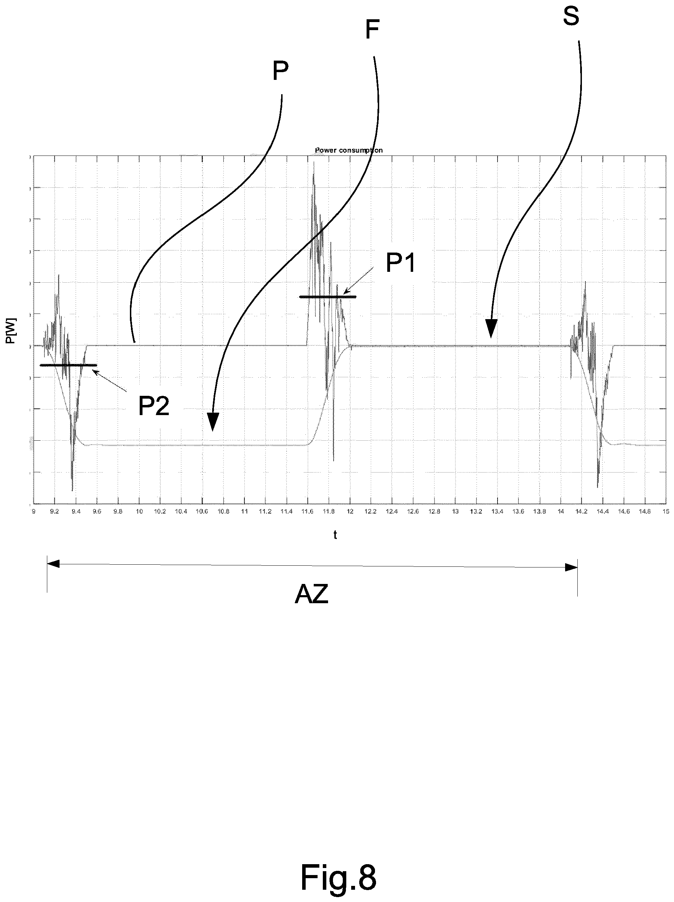

In der Figur 8 ist schematisch und beispielhaft der Ablauf eines Öffnungs- uns Schliessvorganges eines als Klappe ausgebildeten, erfindungsgemässen Absperrorganes wie oben beschrieben.

Die Abszissenachse stellt eine dimensionslose Zeitangabe dar, die Ordinatenachse zeigt skalenlos die vom Stellantrieb aufgenommene und erzeugte Leistung in Watt.

Eine Linie, welche ein Rechtecksignal approximiert, stellt die Position der Klappe dar.

Wie aus dem Verlauf der Linie P ersichtlich, wird beim Bewegen der Klappe 13 in die Freigabeposition F zunächst Leistung benötigt, um die Selbsthemmung des Mechanismus 14 zu überwinden

(erster Hebel 7 muss über den oberen Totpunkt bewegt werden). Dies ist an einem Anstieg der Linie P erkennbar. Da die Klappe 13 jedoch, nachdem der erste Hebel 7 den oberen Totpunkt passiert hat, allein durch Schwerkraft öffnet, wird eine negative Leistung erzeugt, welche durch den Abfall der Linie P sichtbar ist. Das bedeutet dass der Elektromotor 2 Leistung erzeugt. Wie aus der Figur 8 ersichtlich, beträgt die netto erzeugte Leistung beim Bewegen der Klappe 13 in die Freigabeposition F P2 (Watt).

Diese Leistung P2 wird in Form von elektrischer Energie in den Superkondensatoren 4 des Stellantriebs 1 gespeichert.

Beim Schwenken der Klappe 13 in die Schliessposition S wird demgegenüber Leistung benötigt, da die Klappe 13 entgegen der Schwerkraft bewegt werden muss. In der Figur 8 ist dies am Anstieg der Linie P ersichtlich. Die netto benötigte Leistung beträgt gemäss Figur 8 P1 (Watt).

Wenn die Klappe 13 sich in der Freigabeposition F oder in der Schliessposition S befindet (horizontaler Verlauf des "Rechtecksignals"), wird keine Leistung benötigt (der Elektromotor 2 ist stromlos). Dies ist am horizontalen Verlauf der Linie P erkennbar

Da die erzeugte Leistung in den Superkondensatoren 4 gespeichert wird, kann diese bei einem erneuten Schwenken der Klappe 13 in die Schliessposition S verwendet werden. Die Nettoleistung, welche zum Betreiben des Stellantriebs 1 benötigt wird beträgt somit P1-P2 (Watt) pro Öffnungs- und Schliessvorgang. Da jedoch ein Öffnungs- und Schliessvorgang lediglich 10 bis 20 % der Zeit eines Arbeitszyklus AZ beträgt und der Elektromotor 2 sonst stromlos ist, sind gegenüber Stellantriebe aus dem Stand der Technik sehr grosse Energieeinsparungen möglich.

## Patentansprüche

1. Vorrichtung zum Dosieren und/oder Wiegen von Schüttgut, umfassend mindestens ein Schüttgutabsperrorgan, **dadurch gekennzeichnet, dass** das Schüttgutabsperrorgan von wenigstens einem elektromechanischen Stellantrieb (1) betätigbar ist, wobei die Betätigung des Schüttgutabsperrorgans ein Öffnen und/oder Schliessen desselben ist, wobei der Stellantrieb (1)
- einen Elektromotor (2),
- eine dem Elektromotor (2) zugeordnete Steuerungs- und Antriebselektronik (3) umfasst,
und wobei der elektromechanische Stellantrieb (1) Mittel (4) zum Speichern von Energie umfasst.

2. Vorrichtung nach Anspruch 1 **dadurch gekennzeichnet, dass** die Steuerungs- und Antriebselektronik (3) die Mittel zum Speichern von Energie, welche als Mittel (4) zum Speichern von elektrischer Energie ausgebildet sind, umfasst.

3. Vorrichtung nach Anspruch 2 **dadurch gekennzeichnet, dass** die Mittel (4) zum Speichern von elektrischer Energie als Superkondensatoren ausgebildet sind.

4. Vorrichtung nach einem der vorhergehenden Ansprüche, **dadurch gekennzeichnet, dass** der Elektromotor (2) ein Gleichstrommotor, insbesondere ein bürstenloser Gleichstrommotor, ist.

5. Vorrichtung nach einem der vorhergehenden Ansprüchen,
**dadurch gekennzeichnet, dass** der Elektromotor (2) ein Servomotor ist.

6. Vorrichtung nach einem der vorhergehenden Ansprüchen,
**dadurch gekennzeichnet, dass** der Elektromotor (2) zur Erzeugung von elektrischer Energie ausgebildet ist.

7. Vorrichtung nach einem der vorhergehenden Ansprüchen,
**dadurch gekennzeichnet, dass** der Stellantrieb (1) mit einer Stromstärke von höchstens 3 Ampere betreibbar ist.

8. Vorrichtung nach einem der vorhergehenden Ansprüchen,
**dadurch gekennzeichnet, dass** der Stellantrieb ferner ein Getriebe (5), insbesondere ein Kompaktgetriebe, umfasst.

9. Vorrichtung nach einem der vorhergehenden Ansprüchen,
**dadurch gekennzeichnet, dass** die Steuerungs- und Antriebselektronik (3) direkt am Elektromotor (2) angeordnet ist.

10. Vorrichtung nach einem der vorhergehenden Ansprüchen,
**dadurch gekennzeichnet, dass** der Stellantrieb (1) ein Kniehebelgelenk (6) umfasst, welches eine Motor- oder Getriebewelle mit dem Absperrorgan direkt oder indirekt verbindet, wobei ein Totpunkt des Kniehebelgelenks derart ausgelegt ist, dass eine Position des Absperrorgans bei stromlosem Elektromotor haltbar ist.

11. Vorrichtung nach Anspruch 10, **dadurch gekennzeichnet, dass** das Kniehebelgelenk (6) umfasst:
- einen ersten Hebel (7) mit einem exzentrisch angeordneten oder anordenbaren ersten Achsstummel (8), welcher erster Hebel (7) an einer Motor- oder Getriebewelle (9) drehbar gelagert ist, und
- eine Koppelstange (10), welche an dem ersten Achsstummel (8) drehbar gelagert ist, wobei das Kniehebelgelenk (6) ferner
einen zweiten Hebel (11) mit einem exzentrisch angeordneten oder anordenbaren zweiten Achsstummel (12), welcher zweiter Hebel (11) um die Schwenkachse (SA) eines schwenkbaren Absperrorgans (13) und am ersten Achsstummel (8) drehbar gelagert oder lagerbar ist, umfasst.

12. Vorrichtung nach einem der vorhergehenden Ansprüche, **dadurch gekennzeichnet, dass** die Vorrichtung als Schüttgutwaage ausgebildet ist, wobei das Schüttgutabsperrorgan als schwenkbare Klappe ausgebildet ist.

13. Verfahren zum Betreiben einer Vorrichtung nach einem der Ansprüche 1 bis 12, **dadurch gekennzeichnet, dass** beim Betätigen des Stellantriebes durch den Elektromotor (2) Energie in den Mitteln (4) zum Speichern von Energie gespeichert wird.

14. Verfahren nach Anspruch 13, **dadurch gekennzeichnet, dass** die Steuerungs- und Antriebselektronik (3) die Mittel (4) zum Speichern von Energie, welche als Mittel (4) zum Speichern von elektrischer Energie ausgebildet sind, umfasst, wobei die Energie als elektrische Energie, bevorzugt in Superkondensatoren der Steuerungs- und Antriebselektronik (3), gespeichert wird.

## Claims

1. Device for dosing and/or weighing of bulk material, comprising at least one bulk material shut-off element, **characterized in that** the bulk material shut-off element can be actuated by at least one electromechanical actuating drive (1), wherein said actuation of the bulk material shut-off element is an opening and/or closing thereof, wherein the actuating drive(1) comprises
- an electric motor (2),
- control and drive electronics (3) allocated to the electric motor (2),
and wherein the electromechanical actuating drive (1) comprises energy storage means (4).

2. Device according to claim 1, **characterized in that** the control and drive electronics (3) comprise the energy storage means, which are configured as electrical energy storage means (4).

3. Device according to claim 2, **characterized in that** the electrical energy storage means (4) are configured as supercapacitors.

4. Device according to any of the preceding claims, **characterized in that** the electric motor (2) is a direct current motor, in particular a brushless direct current motor.

5. Device according to any of the preceding claims, **characterized in that** the electric motor (2) is a servo motor.

6. Device according to any of the preceding claims, **characterized in that** the electric motor (2) is configured for generation of electrical energy.

7. Device according to any of the preceding claims, **characterized in that** the actuating drive (1) can be operated with a maximum current of 3 Amperes.

8. Device according to any of the preceding claims, **characterized in that** the actuating drive further comprises a gearbox (5), in particular a compact gearbox.

9. Device according to any of the preceding claims, **characterized in that** the control and drive electronics (3) are arranged directly on the electric motor (2).

10. Device according to any of the preceding claims, **characterized in that** the actuating drive (1) comprises a toggling joint (6) which directly or indirectly connects a motor or gearbox shaft to the shut-off element, wherein a dead point of the toggling joint is configured in such a way that a position of the shut-off element can be maintained without provision of electric current to the electric motor.

11. Device according to claim 10, **characterized in that** the toggling joint (6) comprises:
- a first lever (7) with an eccentric, or eccentrically-arrangeable, first axle stub (8), which first lever (7) is rotatably mounted on a motor- or gearbox-shaft (9), and
- a coupling rod (10), which is rotatably mounted at the first axle stub (8), wherein the toggling joint (6) further comprises a second lever (11) with an eccentric, or eccentrically-arrangeable, second axle stub (12), which second lever (11) is rotatably mounted or mountable about the pivot axis (SA) of a pivotable shut-off element (13) and at the first axle stub (8).

12. Device according to any of the preceding claims, **characterized in that** the device is a bulk material scale, wherein the bulk material shut-off element is a pivotable flap.

13. Method for operating a device in accordance with any one of claims 1 to 12, **characterized in that**, during operation of the actuating drive, energy is stored in the energy storage means (4) by means of the electric motor (2).

14. Method according to claim 13, **characterized in that** the control and drive electronics (3) comprise the energy storage means (4), which are electrical energy storage means (4), wherein the energy is stored as electrical energy, preferably in supercapacitors comprised by the control and drive electronics (3).

## Revendications

1. Dispositif de dosage et/ou de pesée de produits en vrac, comprenant au moins un organe de verrouillage de produits en vrac, **caractérisé en ce que** l'organe de verrouillage de produits en vrac peut être actionné par au moins un mécanisme de commande électromécanique (1), l'actionnement de l'organe de verrouillage de produits en vrac étant une ouverture et/ou fermeture de celui-ci, le mécanisme de commande (1) comprenant :
- un moteur électrique (2) ;
- un système électronique de commande et d'entraînement (3) associé au moteur électrique (2) ; et
le mécanisme de commande électromécanique (1) comprenant des moyens (4) d'accumulation d'énergie.

2. Dispositif selon la revendication 1, **caractérisé en ce que** le système électronique de commande et d'entraînement (3) comprend les moyens d'accumulation d'énergie réalisés sous la forme de moyens (4) d'accumulation d'énergie électrique.

3. Dispositif selon la revendication 2, **caractérisé en ce que** les moyens (4) d'accumulation d'énergie électrique sont réalisés sous la forme de supercondensateurs.

4. Dispositif selon l'une quelconque des revendications précédentes, **caractérisé en ce que** le moteur électrique (2) est un moteur à courant continu, notamment un moteur à courant continu sans balai.

5. Dispositif selon l'une quelconque des revendications précédentes, **caractérisé en ce que** le moteur électrique (2) est un servomoteur.

6. Dispositif selon l'une quelconque des revendications précédentes, **caractérisé en ce que** le moteur électrique (2) est réalisé pour produire de l'énergie électrique.

7. Dispositif selon l'une quelconque des revendications précédentes, **caractérisé en ce que** le mécanisme de commande (1) peut être entraîné à une intensité de courant de tout au plus 3 ampères.

8. Dispositif selon l'une quelconque des revendications précédentes, **caractérisé en ce que** le mécanisme de commande comprend en outre une boîte de vitesses (5), notamment une boîte de vitesses compacte.

9. Dispositif selon l'une quelconque des revendications précédentes, **caractérisé en ce que** le système électronique de commande et d'entraînement (3) est disposé directement au niveau du moteur électrique (2) .

10. Dispositif selon l'une quelconque des revendications précédentes, **caractérisé en ce que** le mécanisme de commande (1) comprend une articulation de levier à genou (6) qui relie directement ou indirectement un arbre de moteur ou de boîte de vitesses à l'organe de verrouillage, un point mort de l'articulation de levier à genou étant conçu de telle sorte qu'une position de l'organe de verrouillage peut être arrêtée avec un moteur électrique sans courant.

11. Dispositif selon la revendication 10, **caractérisé en ce que** l'articulation de levier à genou (6) comprend :
- un premier levier (7) avec une première fusée d'essieu (8) agencée ou agençable de façon excentrée, ledit premier levier (7) étant disposé de façon à pouvoir tourner autour d'un arbre de moteur ou de boîte de vitesses (9) ; et
- une tige de couplage (10) disposée de façon à pouvoir tourner au niveau de la première fusée d'essieu (8), l'articulation de levier à genou (6) comprenant en outre un deuxième levier (11) avec une deuxième fusée d'essieu (12) agencée ou agençable de façon excentrée, ledit deuxième levier (11) étant disposé ou pouvant être disposé de façon à pouvoir tourner autour de l'axe de pivotement (SA) d'un organe de verrouillage (13) pouvant pivoter et au niveau de la première fusée d'essieu (8).

12. Dispositif selon l'une quelconque des revendications précédentes, **caractérisé en ce que** le dispositif est réalisé sous la forme d'une balance de produits en vrac, l'organe de verrouillage de produits en vrac étant réalisé sous la forme d'un clapet pouvant pivoter.

13. Procédé d'actionnement d'un dispositif selon l'une quelconque des revendications 1 à 12, **caractérisé en ce que** de l'énergie est accumulée dans les moyens (4) d'accumulation d'énergie en cas d'actionnement du mécanisme de commande par le moteur électrique (2).

14. Procédé selon la revendication 13, **caractérisé en ce que** le système électronique de commande et d'entraînement (3) comprend les moyens (4) d'accumulation d'énergie réalisés sous la forme de moyens (4) d'accumulation d'énergie électrique, l'énergie étant accumulée sous la forme d'énergie électrique, de façon préférée dans des supercondensateurs du système électronique de commande et d'entraînement (3).
